# EUROPEAN PATENT APPLICATION

(11) **EP 4 434 711 A1**
(43) Date of publication of application: **25.09.2024**
(21) Application number: 22896062.1
(22) Date of filing: 16.11.2022
(51) Int. Cl.: B29B 9/06, C08J 9/18, C08J 9/12, C08J 9/14

(54) **BIODEGRADABLE POLYMER BEADS, MANUFACTURING METHOD, AND DEVICE**

(30) Priority: 16.11.2021 CN 202111359232
(71) Applicant: Dongsung Chemical Co., Ltd., Busan 49421 (KR); USEON (NANJING) EXTRUSION MACHINERY CO., LTD., Nanjing City Jiangsu 211100 (CN)
(72) Inventor: CHEN, Zhiqiang, Nanjing City, Jiangsu 211100 (CN); XIA, Tian, Nanjing City, Jiangsu 211100 (CN); CHANG, Junfeng, Nanjing City, Jiangsu 211100 (CN)
(74) Representative: Eisenführ Speiser
(86) International application number: PCT/KR2022/018111
(87) International publication number: WO 2023/090857

(57) **Abstract**

Disclosed in the present invention are biodegradable polymer beads manufactured using a device comprising an extruder and a underwater pelletizing system, wherein at least one extruder is used to perform a pre-mixing reaction on raw materials, followed by extrusion after the reaction; and an extrudate is injected to the pelletizing system and the pressure of process water in the pelletizing system and the saturated vapor pressure of a foaming agent of the extrudate are controlled, and thus the extrudate is used to obtain expandable/expanded beads. In the present invention, through the selection of an appropriate biodegradable polymer raw material, the control of the determination performance and foaming performance of the polymer system, and the selection of appropriate underwater pelletizing process conditions, the air volume, foaming rate, and the like of the biodegradable polymer beads are controlled and foamed beads of the biodegradable polymer are continuously and efficiently produced.

## Description

### Technical Field

The present invention relates to a polymer materials technology and, specifically, to biodegradable polymer beads, and a method and device for manufacturing same.

### Background Art

In commercialized lightweight polymer technology, bead foaming technology has received much attention as it allows the production of polymer foam products with high expansion rates and complex shapes. In the bead foaming process, foam products with irregular geometric shapes and excellent dimensional accuracy are formed through interconnection. Additionally, foam bead products also possess the same density and characteristics as extruded foam products, such as energy absorption, thermal insulation, and soundproofing. Thus, foam bead products can be widely used in areas such as insulation, packaging, furniture, toys, and automotive parts.

The raw materials for manufacturing PLA are renewable resources such as corn stalks and sugar beets, which have garnered interest due to their excellent biocompatibility and biodegradability. PLA has excellent mechanical properties, strong processability, and is relatively inexpensive, and is mainly used in areas like food packaging, agricultural films, medical and textiles, and 3D printing, while modified PLA can be used as a durable good in electronics and automotive parts. PLA has become one of the most important substitutes for petroleum-based polymer materials. PBAT, another widely used polymer material with excellent biodegradability, is widely utilized due to its excellent ductility and impact resistance.

U. S. Patent No. 8283389 and WO 2014/15801 both employ a batch autoclave method to manufacture biodegradable polymer foam beads. In U. S. Patent No. 8283389, PLA beads are statically immersed in liquid CO₂ to obtain CO₂ saturated PLA beads. The saturated PLA beads are maintained at a certain temperature and pressure to prevent bead foaming while ensuring that the CO₂ concentration impregnated after saturation reaches 5 to 18 wt% of the total PLA mass. The saturated PLA beads are then pre-foamed at a pre-foaming temperature. The pre-foamed beads are further foamed and sintered in a mold immediately or after being stored for a certain period of time. The mold temperature is higher than the pre-foaming temperature. International Patent No. WO 2014/15801 achieves a desired three-dimensional structure of EPLA beads during the foaming process by manufacturing dual melt peaks. The manufacturing method of EPLA foam beads introduced in the present invention includes the steps of: 1. obtaining unfoamed PLA particles, 2. heating the unfoamed PLA particles to an annealing temperature and saturating same with a blowing agent, 3. maintaining at the annealing temperature for a certain period to allow the PLA particles to be saturated by the blowing agent, 4. releasing the pressure and cooling the saturated PLA particles obtained in step 3 to room temperature to obtain EPLA foam beads.

U. S. Patent No. 2017/0100861 presents the continuous manufacture of biodegradable polymer foam beads using an air-cooling pelletizing method. The foaming process can use traditional melt foaming processes such as single and twin-screw extrusion, cutting the extrudate at the extruder die head, then cooling same. The extrudate continues to foam after being cut from the die face of the machine head, forming a structure with closed cells and a continuous skin, i.e., a foam bead structure with no open cells in the skin. The density of the manufactured degradable or bio-based foam beads is preferably less than 0.15 g/cm³, more preferably less than 0.075 g/cm³, and most preferably less than 0.05 g/cm³.

Existing technologies for foaming biodegradable polymer beads pertain only to the manufacturing of foamed beads.

### Disclosure of Invention

### Technical Problem

The present invention aims to provide biodegradable polymer beads and a method and device for manufacturing same.

### Solution to Problem

In a first aspect, the present invention relates to a biodegradable polymer bead, manufactured using a device comprising an extruder and an underwater pelletizing system, wherein the device is adapted for: using at least one extruder to perform a premix reaction on a raw material and then an extrusion process; and
injecting the extrudate into a pelletizing system where the pressure of process water in the pelletizing system and the saturation vapor pressure of a blowing agent for an extrudate are controlled to afford foamable/foamed beads.

In a second aspect, the present invention pertains to a method for manufacturing a biodegradable polymer bead, using a device including an extruder and an underwater pelletizing system, the method including the steps of:
mixing a biodegradable polymer, a chain extender masterbatch, and a nucleating agent masterbatch to prepare a first mixture;
mixing a blowing agent with the first mixture to obtain a second mixture; and
extruding the second mixture and pelletizing the extrudate in water to manufacture foamable/foamed beads.

In a third aspect, the present invention relates to a device for manufacturing biodegradable polymer beads, the device including a raw material warehouse, a dehumidification and drying system, a feeding system, a loss-in-weight feeding system, a tandem extruder system, a blowing agent injection system, and an underwater pelletizing system, which are sequentially installed in a material passage order,
wherein the tandem extruder includes a top twin-screw extruder and a bottom single-screw extruder;
the feeding system transports a raw material of each component from the raw material warehouse to the corresponding dehumidification and drying system, where the raw materials of each component are dried by air at high temperatures and low dew points in the dehumidification and drying system;
the loss-in-weight feeding system supplies a dried biodegradable polymer, a chain extender masterbatch, and a nucleating agent masterbatch at a constant mass flow rate to the top twin-screw extruder of the tandem extruder system, and then injects the blowing agent into the barrel through the blowing agent injection system to complete the mixing and diffusion with the polymer system;
a three-way valve with an intermediate pathway, a discharge pathway, and an exhaust pathway installed therein is provided between a discharge end and a die head in the single-screw extruder; and
the underwater pelletizer system includes a rotating cutting head that cuts strip-type polymers extruded by a die head in an underwater chamber into pellets, thereby manufacturing foamable/foamed beads.

### Advantageous Effects of Invention

The present invention is designed for selecting appropriate biodegradable polymer raw materials, regulating the crystallinity and foamability of the polymer system, and selecting suitable underwater pelletizing process conditions to control the air content and foaming rate of the degradable polymer beads; and concomitantly for facilitating the installation of the underwater pelletizer on the die head through the transition between the discharge state of the foaming system and the normal production state by setting the discharge system and adjusting the three-way valve, whereby biodegradable polymer foam beads can be continuously and efficiently produced and are suitable for industrialized production.

### Brief Description of Drawings

FIG. 1 illustrates a schematic diagram of the structure of a device for manufacturing biodegradable polymer beads according to an embodiment of the present invention.
FIG. 2 illustrates a schematic diagram of a device for discharge in an extrusion system according to an embodiment of the present invention.

### Best Mode for Carrying out the Invention

### Details

Hereinafter, embodiments of the disclosure will be described in detail with reference to the accompanying drawings. In the following description of the disclosure, a detailed description of known functions or ~ Details

For a complete understanding of each disclosed embodiment, some specific details are included in the following description. However, it should be recognized by those skilled in the art that these embodiments can be implemented using other methods, components, and materials without these specific details.

Unless otherwise required by the present invention, the terms "comprise," "include," "contain," and "have" in the entire specification and the attached claims should be interpreted in an open and inclusive manner, meaning "including but not limited to." The terms "an embodiment," "embodiment," "another embodiment," or "some embodiments" mentioned throughout the specification mean that at least one embodiment includes the specific reference factors, structures, and features associated with the embodiment. Thus, the phrases "in an embodiment," "in embodiments," "in another embodiment," or "in some embodiments" appearing in different places throughout the specification do not necessarily all refer to the same embodiment, and specific factors, structures, or features can be combined in any appropriate way in one or more embodiments.

### Definitions

As used herein, the term "PLA" refers to polylactic acid, which consists of multiple lactic acid molecules where each molecule has one hydroxyl and one carboxyl group. These molecules dehydrate to interconnect with one another, forming a polymer wherein one molecule is combined with another molecule as a result of the condensation reaction between their respective -OH and - COOH groups.

As used herein, the term "PBAT" refers to a copolymer of butylene adipate and butylene terephthalate, which belongs to the category of thermoplastic biodegradable plastics. PBAT is a copolymer of aliphatic and aromatic groups, combining the excellent degradability of aliphatic polyesters with the superior mechanical properties of aromatic polyesters. PBAT also has excellent heat and impact resistance and is one of the most actively researched and widely used biodegradable plastic materials in the market.

The term "PBS", as used herein, refers to polybutylene succinate, a thermoplastic resin known for its excellent biodegradability. Compared to other biodegradable plastics like polylactic acid, polyhydroxyalkanoate, and polycaprolactone, PBS is relatively inexpensive, has superior mechanical properties, excellent heat resistance, and a thermal deformation temperature close to 100°C. The resin is a focus of biodegradable plastic research and development both domestically and internationally.

As used herein, the term "PCL" refers to polycaprolactone. Known for its excellent biodegradability, biocompatibility, and non-toxicity, PCL is widely used in the production and processing of plasticizers, degradable plastics, nanofiber spinning, and plasticizing materials. By mixing and modifying PCL with PLA, it is possible to obtain a copolymer with excellent mechanical properties and adjustable biodegradation rates.

The term "PHA", as used herein, refers to polyhydroxyalkanoates, noted for their excellent biocompatibility, biodegradability, and thermal processing capabilities of plastics. For recent years, PHA has become one of the most active research topics in the field of biomaterials, suitable for use in biomedical materials and biodegradable packaging materials.

The term "blowing agent", as used herein, refers to a substance that forms pores in the target material and can be classified into chemical and physical blowing agents. Chemical blowing agents release gases such as carbon dioxide and nitrogen upon heating and decomposition, forming micro-pores in the polymer composition; physical blowing agents create foam micro-pores through the physical transformation of a substance, i.e., the expansion of compressed gases, the volatilization of liquids, or the dissolution of solids. In the present invention, the "blowing agent" is selected from substances like pentane and CO₂, and is classified as a physical blowing agent.

The term "chain extender masterbatch", as used herein, refers to a substance that adjusts the rheological properties of biodegradable polymers by increasing molecular weight, broadening the molecular weight distribution, and introducing long-chain branching, thereby improving the melt strength and melt foamability of PLA/PBAT.

The term "nucleating agent masterbatch", as used herein, refers to a substance that introduces an interfacial layer between inorganic filler particles and the polymer melt and employs a cell non-uniform nucleation mechanism. The nucleating agent masterbatch achieves the purpose of increasing the number of cell nucleation points and reducing the cell nucleation energy barrier, thereby enhancing cell density and reducing cell size.

As used herein, the term "twin-screw extruder" refers to a molding and processing machine composed of two interlocking screws, suitable for polymer processing with high production rates, a particularly wide range of applications, and strong adaptability.

As used herein, the term "single-screw extruder" means an extruder that operates based on the friction generated by interaction between the material and the barrel, a common type of extrusion equipment used in the plastic processing industry.

The term "underwater pelletizer" (system), as used herein, refers to a device that cuts polymers extruded by the die head in the form of a strip into pellets in an underwater chamber, using the rotating cutting head of the underwater pelletizer.

In a first aspect, the present invention relates to biodegradable polymer beads manufactured using a device that includes an extruder and an underwater pelletizing system; the device is adapted for using at least one extruder to perform a pre-mix reaction with the raw material and then carrying out the extrusion process; and
injecting the extrudate into a pelletizing system where the pressure of the process water and the saturation vapor pressure of the blowing agent in the extrudate are controlled to produce foamable or foamed beads.

In a second aspect, the present invention pertains to a method for manufacturing biodegradable polymer beads using a device that includes an extruder and an underwater pelletizing system, the method including the steps of:
mixing a biodegradable polymer, a chain extender masterbatch, and a nucleating agent masterbatch to generate a first mixture;
mixing a blowing agent with the first mixture to obtain a second mixture; and
extruding the second mixture and pelletizing the extrudate in water to produce foamable or foamed beads.

In some embodiments, a tandem extruder system is used to perform a pre-mix reaction with the raw material, and the tandem extruder system includes an upper twin-screw extruder and a lower single-screw extruder, wherein the single-screw extruder is connected either vertically or parallel to the discharge end of the twin-screw extruder; and
performs an extrusion process after the reaction.

Specifically, a biodegradable polymer, a chain extender masterbatch, and a nucleating agent masterbatch are fed into the upper twin-screw extruder of the tandem extruder system, where plasticization, mixing, and chain extension reactions are completed to generate the first mixture; a blowing agent is added to and mixed and diffused with the first mixture to obtain the second mixture; and the second mixture is homogenized and cooled in the single-screw extruder.

This design can enhance the system's melt strength and foamability.

In some embodiments, a three-way valve, and an intermediate pathway, a discharge pathway, and an exhaust pathway, each installed in the three-way valve, are provided between the discharge end and the die head in the single-screw extruder.

The intermediate pathway may communicate with the single-screw extruder, the discharge pathway is coaxially installed with the intermediate pathway and communicates with the die head, and the exhaust pathway is installed perpendicular to the intermediate pathway and communicates externally.

In some embodiments, a hydraulic drive system may be controlled to freely switch the intermediate pathway of the three-way valve to communicate with the discharge pathway, thus implementing a setup of the production state of a foaming system; or to switch the three-way valve to communicate with the exhaust pathway, thus implementing a setup of the discharge state of the foaming system. When ensuring that the extruder does not stop, the switch between the discharge state and the normal production state of the foaming system can be implemented, thereby easily installing the underwater pelletizer on the die head.

Here, the design of the three-way valve allows for the implementation of transitioning between the discharge and normal production states of the foaming system, thus facilitating the installation of the underwater pelletizer on the die head and enabling more efficient production of biodegradable polymer foam beads.

In some embodiments, the manufacturing method includes:
switching the three-way valve to the discharge state, subjecting the biodegradable polymer, the chain extender masterbatch, and the nucleating agent to a stable chain extension reaction state to generate a first mixture, then adding a blowing agent to prepare a second mixture; switching the three-way valve to the production state after stably obtaining the second mixture in the discharge state;
extruding the second mixture from the die head; and
using the rotating cutting head of the underwater pelletizer to cut strip-type polymers extruded by the die head into pellets within the underwater chamber to produce foamable or foamed beads.

Here, the process water passes through the underwater chamber and together with polymer beads along corresponding waterways in pipelines, ensuring continuous transportation of the beads to the drying apparatus. The pressure of the process water may reach up to 1.51 MPa, and the water pressure can be controlled by adjusting the operation frequency of the water pump. The temperature of the process water is bidirectionally controlled by electrical heating and cooling machinery.

In some embodiments, after the transition of the three-way valve from discharge to production state, the pressure change ΔP at the machine head is controlled to be 3 MPa to less than 5 MPa.

In some embodiments, the pressure change ΔP at the machine head is controlled to be 1 MPa to less than 3 MPa.

In some embodiments, the pressure change ΔP at the machine head is controlled to be less than 1 MPa.

Here, the pressure on the extruder outlet side is a critical factor influencing the temperature distribution and residence time distribution of the polymer/blowing agent system in the extruder barrel, affecting the state of the chain extension reaction and the foamability of the system. Controlling the pressure change ΔP at the machine head ensures uniform foaming rates of the foamed beads, reduces the rate of defective bead products, and increases the output of each batch.

In some embodiments, if the pressure of the process water in the pelletizing system is higher than the saturation vapor pressure of the blowing agent during the manufacturing of biodegradable polymer beads using an underwater pelletizing method, the extrudate enters the underwater chamber from the die head and the blowing agent remains within the polymer matrix during the curing of polymer, forming foamable beads; if the pressure of the process water of the pelletizing system is lower or at normal pressure, after the extrudate leaves the die head and enters the underwater chamber, the dissolved blowing agent in the polymer matrix begins nucleation and foaming, resulting in foamed beads.

In some embodiments, the extruder is adjusted to have an outlet pressure of 10 to 20 MPa.

In some embodiments, the extruder is adjusted to have an outlet pressure of 12 to 18 MPa.

In some embodiments, the extruder is adjusted to have an outlet pressure of 15 to 18 MPa.

In some embodiments, the underwater pelletizing system is adjusted to have a water pressure of 0.2 to 1.0 MPa.

In some embodiments, the underwater pelletizing system is adjusted to have a water pressure of 0.2 to 0.6 MPa.

In some embodiments, the underwater pelletizing system is adjusted to have a water pressure of 0.2 to 0.4 MPa.

In some embodiments, the process water in the underwater pelletizing system is adjusted to have a temperature of 10 to 90°C.

In some embodiments, the process water in the underwater pelletizing system is adjusted to have a temperature of 30 to 80°C.

In some embodiments, the process water in the underwater pelletizing system is adjusted to have a temperature of 30 to 50°C.

In some embodiments, the device further includes: a discharge pipe, wherein the discharge pipe is installed outside the exhaust pathway, and the end of the discharge pipe that is far from the three-way valve extends outside the valve body; and a heating device that is installed on the external surface of the discharge pipe extended outside the valve body. This setup ensures that after the entire biodegradable polymer bead foaming system is terminated and restarted, the heating device outside the discharge pipe can remelt the solidified material in the exhaust pathway to prevent clogging. An insulation device is installed on the external surface of the heating device to effectively prevent burns caused by operator mishandling.

In some embodiments, the diameter D of the external exhaust pathway on the valve body ranges from 0.5 to 5 mm.

In some embodiments, the diameter D of the external exhaust pathway on the valve body ranges from 1 to 3 mm.

In some embodiments, the diameter D of the external exhaust pathway on the valve body ranges from 2 to 3 mm.

In some embodiments, the aspect ratio L/D of the exhaust pathway ranges from 5 to 50.

In some embodiments, the aspect ratio L/D of the exhaust pathway ranges from 10 to 35.

In some embodiments, the aspect ratio L/D of the exhaust pathway ranges from 20 to 30.

By selecting the appropriate size of the external exhaust pathway on the valve body, the pressure change at the machine head can be maintained within a specific range after the three-way valve transitions from the discharge position to the production position, improving the production efficiency and stability of the foamed beads.

In some embodiments, the method further includes a drying step before mixing the components, wherein the feed system transports raw materials of each component from the raw material warehouse to the corresponding dehumidification and drying system and raw materials of each component are dried by air at high temperatures and low dew points in the dehumidification and drying system, reducing the moisture content of each dried component to 50 to 200 ppm.

In some embodiments, the method further includes a drying step before mixing the components, where the feed system transports raw material of each component from the raw material warehouse to the corresponding dehumidification and drying system and the raw materials of each component are dried by air at high temperatures and low dew points in the dehumidification and drying system, reducing the moisture content of each dried component to 50 to 100 ppm.

The dehumidification and drying system is used to dehumidify and dry biodegradable polymers, chain extender masterbatch, and nucleating agent masterbatch. The dehumidification and drying system includes a dehumidifier, drying fan, and drying hopper. The dehumidifier uses a molecular sieve or honeycomb rotary dehumidifying source to dry the air inside the dehumidification system to a dew point of -45°C or less before transferring the air to a drying hopper for each component through the drying fan.

In some embodiments, the low dew point air is heated by a heater before entering the drying hopper.

In some embodiments, the low dew point air is heated by a heater to a temperature of 50 to 120°C.

In some embodiments, the low dew point air is heated by a heater to a temperature of 50 to 100°C.

In some embodiments, the low dew point air is heated by a heater to a temperature of 50 to 80°C.

In some embodiments, the biodegradable polymer is selected from PLA, PBAT, PBS, PCL, PHA, or a mixture thereof.

In some embodiments, the chain extender masterbatch is prepared from a polymer carrier and a chain extender.

In some embodiments, the concentration of PLA in the chain extender masterbatch is 70 wt%, and the chain extender is selected from epoxy chain extenders, specifically from styrene-acrylate oligomer-based epoxy chain extenders, with a concentration of 30 wt% within the chain extender masterbatch.

In some embodiments, the concentration of PLA in the chain extender masterbatch is 90 wt%; the chain extender, selected from epoxy chain extenders, is specifically selected from styrene-acrylate oligomer-based epoxy chain extenders, and the concentration of the chain extender in the chain extender masterbatch is 10 wt%. The average functionality of these chain extenders is greater than 4.

In some embodiments, the concentration of the chain extender masterbatch ranges from 0.5 to 5 wt%.

In some embodiments, the concentration of the chain extender masterbatch ranges from 0.8 to 2.5 wt%.

In some embodiments, the concentration of the chain extender masterbatch ranges from 1 to 2 wt%.

In some embodiments, the nucleating agent masterbatch is manufactured by melt mixing a polymer carrier and nucleating agents in a twin-screw extruder. Here, the polymer carrier is PLA, and the nucleating agent is at least one selected from inorganic additives such as talc powder, calcium carbonate, silicon dioxide, and nanoclays. The concentration of the carrier polymer can be set to different values as needed.

In some embodiments, the concentration of the nucleating agent masterbatch ranges from 1 to 4 wt%.

In some embodiments, the concentration of the nucleating agent masterbatch ranges from 1.5 to 2.5 wt%.

In some embodiments, the blowing agents are selected from pentane or CO₂.

In some embodiments, the injection amount of the blowing agent ranges from 2 to 15 wt%.

In some embodiments, the injection amount of the blowing agent ranges from 5 to 10 wt%.

In some embodiments, the injection amount of the blowing agent ranges from 5 to 8 wt%.

Here, the amount of blowing agent injected determines the internal air volume in the foamable beads and the final expansion rate of the foamed beads.

In crystalline polymers, the presence of crystalline regions prevents the storage of blowing agents in the case of solids, thus, beads can only be manufactured as foamed beads. When manufacturing foamable beads from biodegradable polymers, amorphous PLA should be selected as the raw material. PLA consists of two different optical isomer monomers, L and D. When the content of the D monomer is less than 7%, the molecular chains can arrange regularly, forming crystalline PLA. If the content of the D monomer is higher, PLA is completely amorphous, such as Nature Works' 4060D grade PLA with 12% D monomer content, and 8302D grade PLA with 10% D monomer content.

Moreover, beads with different densities and expansion rates of PLA/PBAT can be manufactured by controlling the amount of blowing agent injected and the pressure of the process water. There are no special requirements regarding the crystallinity of PLA and PBAT used in the manufacture of foamed beads. PLA and PBAT can be melt-mixed to produce a PLA/PBAT composite, with PBAT's mass fraction within the composite ranging from 25 to 75 wt%, preferably 25 to 50 wt%, and used as raw material for the manufacture of biodegradable polymer foamed beads. PLA and PBAT can also be fed separately into the extruder during the bead manufacturing process, where extrusion and foaming allow for the mixing of both components. Additionally, the styrene-acrylate oligomer-based epoxy chain extender in this invention can act as a compatibilizer for PLA/PBAT, eliminating the need for additional compatibilizers.

Process conditions for manufacturing foamable beads are as follows. When using amorphous PLA as the raw material, pentane is used as the physical blowing agent. The amount of pentane injected ranges from 2 to 15 wt% of the feeding amount of the polymer, preferably from 5 to 10 wt%, and more preferably from 5 to 8 wt%. Process conditions such as the concentration of the chain extender masterbatch and the rotation speed of the main engine are adjusted to set the extruder's outlet pressure to between 10 and 20 MPa, preferably between 10 and 15 MPa, and more preferably between 12 and 15 MPa. The water pressure of the underwater pelletizing system is controlled to be between 0.5 and 1.5 MPa, preferably between 0.6 and 1.3 MPa, and more preferably between 0.8 and 1.2 MPa. The temperature of the process water is adjusted to between 10 and 75°C, preferably between 20 and 50°C, and more preferably between 30 and 35°C.

In a third aspect, the present invention relates to a device for manufacturing biodegradable polymer beads, the device including a raw material warehouse, a dehumidification and drying system, a feeding system, a loss-in-weight feeding system, a tandem extruder system, a blowing agent injection system, and an underwater pelletizing system, which are sequentially installed in a material passage order,
wherein the tandem extruder includes a top twin-screw extruder and a bottom single-screw extruder;
the feeding system transports a raw material of each component from the raw material warehouse to the corresponding dehumidification and drying system, where the raw materials of each component are dried by air at high temperatures and low dew points in the dehumidification and drying system;
the loss-in-weight feeding system supplies a dried biodegradable polymer, a chain extender masterbatch, and a nucleating agent masterbatch at a constant mass flow rate to the top twin-screw extruder of the tandem extruder system, and then injects the blowing agent into the barrel through the blowing agent injection system to complete the mixing and diffusion with the polymer system;
a three-way valve with an intermediate pathway, a discharge pathway, and an exhaust pathway installed therein is provided between a discharge end a die head in the single-screw extruder; and
strip-type polymers extruded by the die head in the underwater chamber are cut by a rotating cutting head of the underwater pelletizer into pellet forms, thus producing foamable/foamed beads.

Compared to the traditional autoclave method of bead manufacturing, the tandem extruder system and underwater pelletizing system used in the present invention overcome the intermittent bead manufacturing disadvantages of the autoclave method and enable continuous production. The underwater pelletizing method of the present invention completes the extrusion and specifically controls the pressure of the process water and the saturation vapor pressure of the blowing agent in the pelletizing system to manufacture foamable or foamed beads.

Beneficial Effects: By selecting the appropriate size of the external exhaust pathway of the three-way valve body for the device for manufacturing biodegradable bead, after transitioning the three-way valve from the discharge state to the production state, the pressure change at the machine head is small, enhancing the production efficiency and stability of PLA/PBAT foam beads. Foamable beads have advantages over foamed beads in terms of transportation and density control processes. Traditional biodegradable polymer bead foaming technology focuses only on the manufacturing of foamed beads; however, the underwater pelletizing foam bead manufacturing technology of the present invention yields higher returns compared to conventional air-cooling pelletizing technology and maintains the biodegradability of the final product by selecting appropriate additives.

Hereinafter, a detailed description will be given of the present invention through Examples.

### EXAMPLE 1

Amorphous PLA was selected as a biodegradable polymer raw material. Clariant CESA OMAN698493 was used as a chain extender masterbatch with an addition amount of 2 wt%. A nucleating agent masterbatch selected PLA as a carrier polymer and used talc powder of 1200 mesh as a nucleating agent, with a talc powder concentration of 25 wt% in the nucleating agent masterbatch. Both were melt mixed using a twin-screw extruder. In a foaming system, the addition amount of the nucleating agent masterbatch was 2.5 wt%. Pentane was used as a blowing agent, with an injection amount of 6 wt% of the polymer.

The tandem extruder was utilized to extrude and foam PET, with the upper twin-screw extruder having a diameter D=40 mm and an aspect ratio L/D=40, and the lower single-screw extruder having a diameter D=65 mm and an aspect ratio L/D=24. The extruder had a throughput of 60 kg/hr and an outlet pressure of 12 MPa, and the process water had a pressure of 1.0 MPa and a temperature of 30°C. The air content in the manufactured foamable PLA beads was 6 wt%.

The temperature settings for the extruder are as follows.

**TABLE 1**

| Extrusion Section | | Temp. (°C) |
|---|---|---|
| Upper/Twin-screw Extruder | Feed Section | 60 |
| | Melting Section | 165 ∼ 180 |
| | Mixing Section | 185 ∼ 200 |
| | Metering Section | 160 ∼ 180 |
| Lower/Single-screw Extruder | | 135 ∼ 160 |
| Die Head | | 250 ∼ 260 |
| Three-way Valve | | 180 |
| Discharge Pipe | | 180 |

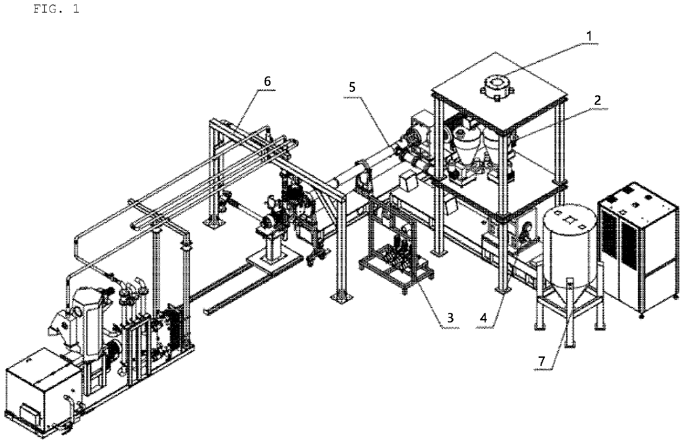

As depicted in FIG. 1, the device for manufacturing biodegradable polymer beads includes a raw material warehouse (1), a dehumidification and drying system (7), a feeding system, a loss-in-weight feeding system (2), a twin-screw extruder (4), a single-screw extruder (5), a blowing agent injection system (3), and an underwater pelletizing system (6), which are sequentially installed in a material passage order,
wherein the tandem extruder includes the upper twin-screw extruder (4) and the a lower single-screw extruder (5) ;
the feeding system transports raw materials of each component from the raw material warehouse (1) to the corresponding dehumidification and drying system (7), where the raw materials of each component are dried by air at high temperatures and low dew points in the dehumidification and drying system;
the loss-in-weight feeding system (2) supplies the dried PLA, chain extender masterbatch, and nucleating agent masterbatch at a constant mass flow to the upper twin-screw extruder (4) of the tandem extruder system and then injects the blowing agent into the barrel through the blowing agent injection system (3) to complete the mixing and diffusion with the polymer system;
a three-way valve (51) with an intermediate pathway (52), a discharge pathway (53), and an exhaust pathway (54) installed therein is provided between the discharge end and the die head in the single-screw extruder (5); and
strip-type polymers extruded by the die head in the underwater chamber are cut by the rotating cutting head of the underwater pelletizer into pellets, thus producing foamable or foamed beads.

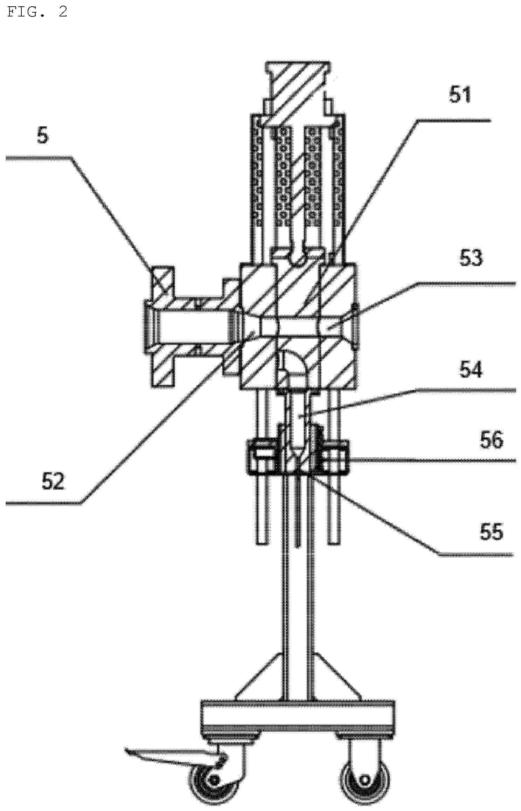

FIG. 2 is a schematic diagram of a device for discharge in an extrusion system. As shown, the extrusion system includes a single-screw extruder (5), a three-way valve (51), an intermediate pathway (52), a discharge pathway (53), an exhaust pathway (54), a discharge pipe (55), and a heating device (56);
specifically, a three-way valve (51) with an intermediate pathway (52), a discharge pathway (53), and an exhaust pathway (54) installed therein is provided between a discharge end and a die head in the single-screw extruder (5);
the intermediate pathway (52) may communicate with the single-screw extruder and the discharge pathway (53) is coaxially installed with the three-way valve (52) and communicates with the die head; and the exhaust pathway (54) is installed perpendicularly to the three-way valve (52) and communicates externally.

The discharge pipe (55) is installed outside the exhaust pathway (54), and one end of the discharge pipe (55) that is far from the three-way value (51) extends outside the valve body; and a heating device (56) is installed on the external surface of the discharge pipe (55) extended outside the valve body, and an insulation device is installed on the external surface of the heating device (56).

### Concrete manufacturing steps are as follows.

PLA, PBAT, composites of both PLA and PBAT, the chain extender masterbatch, and the nucleating agent masterbatch are dehumidified and dried using the dehumidification and drying system (7). The dehumidifier operates with a molecular sieve or a honeycomb rotary dehumidification source to dry the air within the dehumidification system to a dew point of -45°C or lower. The dried air is then transferred to a drying hopper of each component via a drying fan. The low dew point air is heated by a heater to between 50 and 120°C, preferably between 50 and 100°C, and more preferably between 50 and 80°C before entering the drying hopper. The feeding system transports raw materials of each component from the raw material warehouse (1) to the corresponding drying hopper, where raw materials of each component is dried by high temperature and low dew point air in a drying hopper. The moisture content of each component is reduced to between 50 and 100 ppm, and preferably around 50 to 100 ppm.

The three-way valve (51) is switched to the discharge state. Using the loss-in-weight feeding system (2), the dried biodegradable polymer, chain extender masterbatch, and nucleating agent masterbatch are supplied at a constant mass flow rate to the upper twin-screw extruder (4) of the tandem extruder system. Here, plasticization, mixing, and chain extension reactions are completed in the twin-screw extruder (4) to produce the first mixture; concurrently, the blowing agent is pressurized and transported via a booster pump, quantitatively injected into the extruder barrel, and mixed and diffused with the first mixture to obtain the second mixture. After obtaining a stable second mixture in the discharge state, the three-way valve (51) is switched to the production state; the second mixture is homogenized and cooled in the single-screw extruder (5) and then extruded at the die head;

The strip-type polymer extruded by the die head is cut into pellets by the rotating cutting head of the underwater pelletizer (6) in the underwater chamber. When the pressure of the process water in the pelletizing system (6) is higher than the saturation vapor pressure of the blowing agent, the extrudate enters the underwater chamber from the die head, and the blowing agent remains within the polymer matrix during the polymer curing process, resulting in foamable beads.

After the three-way valve is switched from the discharge state to the production state, the pressure change at the machine head (ΔP) is controlled to be 3 to less than 5 MPa, preferably 1 to less than 3 MPa, and more preferably less than 1 MPa.

### EXAMPLE 2

PBAT was selected as a biodegradable polymer raw material. Clariant CESA extend 10069N was used as a chain extender masterbatch with an addition amount of 2.5 wt%. A nucleating agent masterbatch selected PLA as a carrier polymer and used Cloisite 30B nanoclay from Southern Clay as a nucleating agent, with a nanoclay concentration of 10 wt% in the nucleating agent masterbatch. Both were melt mixed using a twin-screw extruder. In a foaming system, the addition amount of the nucleating agent masterbatch was 1.0 wt%. Supercritical CO₂ was used as a blowing agent, with an injection amount of 10 wt% of the polymer.

The same extruder and temperature settings as in Example 1 were used. The extruder throughput was 65 kg/hr, extruder outlet pressure was 15 MPa, process water pressure was 0.2 MPa, and temperature was 35°C. The expansion rate of the manufactured foamable PBAT beads was 35 times.

### EXAMPLE 3

PLA and PBAT were selected as biodegradable polymer raw materials. The materials were separately supplied in a loss-in-weight manner to a twin-screw extruder, with a weight ratio of 75/25 (w/w) maintained for PLA/PBAT. Clariant CESA OMAN698493 was used as a chain extender masterbatch with an addition amount of 1.5 wt%. The same nucleating agent masterbatch as in Example 1 was used in an amount of 2.0 wt%. Supercritical CO₂ was used as a blowing agent, with an injection amount of 12 wt% of the polymer.

The same extruder and temperature settings as in Example 1 were used. The extruder throughput was 60 kg/hr, extruder outlet pressure was 12 MPa, process water pressure was 0.2 MPa, and temperature was 30°C. The expansion rate of the manufactured foamable beads was 38 times.

### EXAMPLE 4

PLA and PBS were selected as biodegradable polymer raw materials. The materials were separately supplied in a loss-in-weight manner to a twin-screw extruder, with a weight ratio of 75/25 (w/w) maintained for PLA/PBS. The same chain extender masterbatch as in Example 1 was added in an amount of 0.8 wt% and the same nucleating agent master batch as in Example 1 was added in an amount of 1.5 wt%. Calcium carbonate was used as the nucleating agent with a concentration of 8 wt% in the masterbatch. The materials were melt mixed through the twin-screw extruder. Pentane was used as a blowing agent, with an injection amount of 2 wt% of the polymer.

The same extruder and temperature settings as in Example 1 were used. The extruder throughput was 60 kg/hr, extruder outlet pressure was 10 MPa, process water pressure was 0.2 MPa, and temperature was 20°C. The expansion rate of the manufactured foamable beads was 35 times.

### EXAMPLE 5

PLA and PHA were selected as biodegradable polymer raw materials. The materials were separately supplied in a loss-in-weight manner to a twin-screw extruder, with a weight ratio of 75/25 (w/w) maintained for PLA/PHA. The same chain extender masterbatch as in Example 1 was added in an amount of 3 wt% and the same nucleating agent master batch as in Example 1 was used. Silicon dioxide was used as the nucleating agent with a concentration of 30 wt% in the nucleating agent masterbatch. The materials were melt mixed through the twin-screw extruder. In the foaming system, the nucleating agent masterbatch was added in an amount of 3 wt%. Supercritical CO₂ was used as a blowing agent, with an injection amount of 12 wt% of the polymer.

The same extruder and temperature settings as in Example 1 were used. The extruder throughput was 65 kg/hr, extruder outlet pressure was 20 MPa, process water pressure was 1.0 MPa, and temperature was 50°C. The expansion rate of the manufactured foamable beads was 40 times.

### EXAMPLE 6

PLA and PBS were selected as biodegradable polymer raw materials. The materials were separately supplied in a loss-in-weight manner to a twin-screw extruder, with a weight ratio of 75/25 (w/w) maintained for PLA/PBS. The same chain extender masterbatch as in Example 1 was added in an amount of 5 wt% and the same nucleating agent masterbatch and nucleating agent as in Example 1 were used, with a talc powder concentration of 40 wt% in the nucleating agent masterbatch. The materials were melt mixed through the twin-screw extruder. In the foaming system, the nucleating agent masterbatch was added in an amount of 4 wt%. Pentane was used as a blowing agent, with an injection amount of 15 wt% of the polymer.

The same extruder and temperature settings as in Example 1 were used. The extruder throughput was 65 kg/hr, extruder outlet pressure was 18 MPa, process water pressure was 0.6 MPa, and temperature was 80°C. The expansion rate of the manufactured foamable beads was 38 times.

### EXAMPLE 7

PLA and PCL were selected as biodegradable polymer raw materials. The materials were separately supplied in a loss-in-weight manner to a twin-screw extruder, with a weight ratio of 75/25 (w/w) maintained for PLA/PCL. Clariant CESA OMAN698493 was used as a chain extender masterbatch in an amount of 1.5 wt%. The same nucleating agent master batch as in Example 1 was added in an amount 2.0 wt%. Supercritical CO₂ was used as a blowing agent, with an injection amount of 12 wt% of the polymer.

The same extruder and temperature settings as in Example 1 were used. The extruder throughput was 60 kg/hr, extruder outlet pressure was 12 MPa, process water pressure was 0.2 MPa, and temperature was 30°C. The expansion rate of the manufactured foamable beads was 36 times.

Collectively, the present invention is adapted for controlling the air volume and foaming rate of degradable polymer beads by selecting appropriate biodegradable polymer raw materials, adjusting the crystallinity and foamability of the polymer system, and selecting suitable underwater pelletizing process conditions; and also, for switching the foaming system between discharge state and normal production state through control over the discharge system and the three-way value, facilitating the installation of the underwater pelletizer on the die head. This allows for the continuous and efficient production of biodegradable polymer foam beads, making the present invention suitable for industrialized production.

As can be understood from the foregoing, specific embodiments of the present invention have been described for purposes of illustration, but various modifications or improvements may be made by those skilled in the art without departing from the spirit and scope of the present invention, and such modifications or alternations shall be within the scope of the appended claims of the present invention.

## Claims

1. A biodegradable polymer bead, manufactured using a device comprising an extruder and an underwater pelletizing system,
wherein the device is adapted for: using at least one extruder to perform a premix reaction on a raw material and then an extrusion process; and
injecting the extrudate into a pelletizing system where the pressure of process water in the pelletizing system and the saturation vapor pressure of a blowing agent for an extrudate are controlled to afford foamable/foamed beads.

2. A method for manufacturing the biodegradable polymer bead according to claim 1, manufactured in a device comprising an extruder and an underwater pelletizing system, the method comprising the steps of:
mixing a biodegradable polymer, a chain extender masterbatch, and a nucleating agent masterbatch to prepare a first mixture;
mixing a blowing agent with the first mixture to obtain a second mixture; and
extruding the second mixture and pelletizing the extrudate in water to manufacture foamable/foamed beads.

3. The method of claim 2, wherein a tandem extruder system is used to perform a pre-mix reaction with the raw material, and includes an upper twin-screw extruder and a lower single-screw extruder, wherein the single-screw extruder is connected either vertically or parallel to the discharge end of the twin-screw extruder; and performs an extrusion process after the reaction;
specifically wherein a biodegradable polymer, a chain extender masterbatch, and a nucleating agent masterbatch are fed into the upper twin-screw extruder of the tandem extruder system, where plasticization, mixing, and chain extension reactions are completed to generate the first mixture; a blowing agent is added to and mixed and diffused with the first mixture to obtain the second mixture; and the second mixture is homogenized and cooled in the single-screw extruder.

4. The method of claim 3, wherein a three-way valve with an intermediate pathway, a discharge pathway, and an exhaust pathway installed therein is provided between a discharge end and a die head in the single-screw extruder;
the intermediate pathway can communicate with the single-screw extruder, the discharge pathway is coaxially installed with the intermediate pathway and communicates with the die head, and the exhaust pathway is installed perpendicular to the intermediate pathway and communicates externally.

5. The method of claim 4, wherein a hydraulic drive system is controlled to freely switch the intermediate pathway of the three-way valve to communicate with the discharge pathway, thus implementing a setup of the production state of a foaming system; or to switch the three-way valve to communicate with the exhaust pathway, thus implementing a setup of the discharge state of the foaming system; when ensuring that the extruder does not stop, the switch between the discharge state and the normal production state of the foaming system is implemented, thereby easily installing the underwater pelletizer on the die head.

6. The method of claim 5, wherein the method comprises:
switching the three-way valve to a discharge state, subjecting the biodegradable polymer, the chain extender masterbatch, and the nucleating agent to a stable chain extension reaction state to generate a first mixture, then adding a blowing agent to prepare a second mixture; switching the three-way valve to the production state after stably obtaining the second mixture in the discharge state;
extruding the second mixture from the die head; and
using the rotating cutting head of the underwater pelletizer to cut strip-type polymers extruded by the die head into pellets within the underwater chamber to produce foamable or foamed beads,
wherein after switching of the three-way valve from discharge state to production state, a pressure change ΔP at the machine head is controlled to be 3 MPa to less than 5 MPa, preferably 1 MPa to less than 3 MPa, and more preferably less than 1 MPa.

7. The method of claim 2, wherein if the pressure of the process water in the pelletizing system is higher than a saturation vapor pressure of the blowing agent during the manufacturing of biodegradable polymer beads using an underwater pelletizing method, the extrudate enters the underwater chamber from the die head and the blowing agent remains within the polymer matrix during the curing of polymer, forming foamable beads; if the pressure of the process water of the pelletizing system is lower or at normal pressure, after the extrudate leaves the die head and enters the underwater chamber, the dissolved blowing agent in the polymer matrix begins nucleation and foaming, resulting in foamed beads;
the extruder is adjusted to have an outlet pressure of 10 to 20 MPa, preferably 12 to 18 MPa, and more preferably 15 to 18 MPa; the underwater pelletizing system is adjusted to have a water pressure of 0.2 to 1.0 MPa, preferably 0.2 to 0.6 MPa, and more preferably 0.2 to 0.4 MPa; and the process water is adjusted to have a temperature of 10 to 90°C, preferably 30 to 80°C, and more preferably 30 to 50°C.

8. The method of claim 4, wherein the device further comprises:
a discharge pipe, wherein the discharge pipe is installed outside the exhaust pathway, and the end of the discharge pipe that is far from the three-way valve extends outside the valve body; and
a heating device that is installed on the external surface of the discharge pipe extended outside the valve body, with an insulation device installed on the external surface of the heating device; and
the external exhaust pathway on the valve body ranges in diameter D from 0.5 to 5 mm, preferably from 1 to 3 mm, and more preferably from 2 to 3 mm, and the exhaust pathway ranges in aspect ratio L/D from 5 to 50, preferably from 10 to 35, and from 20 to 30.

9. The method of claim 2, wherein the biodegradable polymer is selected from PLA, PBAT, PBS, PCL, PHA, or a mixture thereof; the chain extender masterbatch is prepared from a polymer carrier and a chain extender; the polymer carrier is PLA, the chain extender is selected from epoxy chain extenders, the epoxy chain extenders are selected from styrene-acrylate oligomer-based epoxy chain extenders, and the chain extender masterbatch has a concentration of 0.5 to 5 wt%, preferably 0.8 to 2.5 wt%, and more preferably 1 to 2 wt%; the nucleating agent masterbatch is prepared by melt mixing a polymer carrier and a nucleating agent through a twin-screw extruder, the polymer carrier is PLA, the nucleating agent is at least one of talc powder, calcium carbonate, silicon dioxide, and nanoclays, the nucleating agent masterbatch has a concentration of 1 to 4 wt% and preferably 1.5 to 2.5 wt%; and the foaming agent is selected from pentane or CO₂ and injected in an amount of 2 to 15 wt%.

10. A device for manufacturing the biodegradable polymer bead of claim 1, the device comprising:
a raw material warehouse, a dehumidification and drying system, a feeding system, a loss-in-weight feeding system, a tandem extruder system, a blowing agent injection system, and an underwater pelletizing system, which are sequentially installed in a material passage order,
wherein the tandem extruder comprises a top twin-screw extruder and a bottom single-screw extruder;
the feeding system transports a raw material of each component from the raw material warehouse to the corresponding dehumidification and drying system, where the raw materials of each component are dried by air at high temperatures and low dew points in the dehumidification and drying system;
the loss-in-weight feeding system supplies a dried biodegradable polymer, a chain extender masterbatch, and a nucleating agent masterbatch at a constant mass flow rate to the top twin-screw extruder of the tandem extruder system, and then injects the blowing agent into the barrel through the blowing agent injection system to complete the mixing and diffusion with the polymer system;
a three-way valve with an intermediate pathway, a discharge pathway, and an exhaust pathway installed therein is provided between a discharge end and a die head in the single-screw extruder; and
the underwater pelletizer system includes a rotating cutting head that cuts strip-type polymers extruded by a die head in an underwater chamber into pellets, thereby manufacturing foamable/foamed beads.
